# EUROPÄISCHE PATENTSCHRIFT

(11) **EP 0 789 784 B1**
(45) Veröffentlichungstag und Bekanntmachung des Hinweises auf die Patenterteilung: **13.01.1999**
(21) Anmeldenummer: 95937003.2
(22) Anmeldetag: 25.10.1995
(51) Int. Cl.: C22B 61/00, C22B 3/00

(54) **VERFAHREN ZUM AUFSCHLUSS UND ZUR RÜCKGEWINNUNG DER METALLISCHEN BESTANDTEILE AUS SUPERLEGIERUNGEN**
PROCESS FOR DECOMPOSING AND RECOVERING THE METAL COMPONENTS FROM SUPERALLOYS
PROCEDE DE DECOMPOSITION ET DE RECUPERATION DE COMPOSANTS METALLIQUES DANS DES SUPERALLIAGES

(30) Priorität: 02.11.1994 DE 4439041
(43) Veröffentlichungstag der Anmeldung: 20.08.1997
(73) Patentinhaber: H.C. Starck GmbH & Co. KG, 38642 Goslar (DE)
(72) Erfinder: KRYNITZ, Ulrich, D-38640 Goslar (DE); OLBRICH, Armin, D-30723 Seesen (DE); KUMMER, Wolfgang, D-38642 Goslar (DE); SCHLOH, Martin, D-65195 Wiesbaden (DE)
(74) Vertreter: Steiling, Lothar, Dr.
(86) Internationale Anmeldenummer: EP9504177
(87) Internationale Veröffentlichungsnummer: WO9614440

(56) Entgegenhaltungen:
- DE-A- 1 942 191
- DE-A- 2 248 178
- DE-A- 2 305 230
- FR-A- 2 671 104
- GB-A- 661 976
- US-A- 3 348 942
- US-A- 4 278 641
- US-A- 4 557 906
- US-A- 4 599 222
- US-A- 4 604 265

## Beschreibung

Die vorliegende Erfindung betrifft ein Verfahren zum Aufschluß von Superlegierungen und anschließender Rückgewinnung der Legierungsmetalle. Das Verfahren besteht aus zwei Schritten.

Superlegierungen sind Legierungen auf Kobalt- oder Nickelbasis, die eine ganze Reihe von zusätzlichen Elementen enthalten können, wie zum Beispiel Aluminium, Chrom, Hafnium, Molybdän, Platin, Rhenium, Tantal und Wolfram. Ein guter Überblick über den Stand der Technik bezüglich der Zusammensetzung und charakteristischen Eigenschaften von Superlegierungen befindet sich in der Kirk-Othmer Encyclopedia of Technology, Volume 12, Fourth Edition, Seiten 417-458.

Im Gegensatz zu normalen Legierungen (z.B. Re-W Legierungen in US-A-4 278 641) werden Superlegierungen in oxidierenden und korrosiven Umgebungen nicht angegriffen. Nach Swiss Materials 1990, 2, 5-10 finden Bauteile aus Superlegierungen wegen ihrer Oxidationsstabilität u.a. Verwendung als Schaufeln in Flugzeugturbinen.

Der Aufschluß und die Rückgewinnung der Legierungsmetalle der Superlegierungen ist wirtschaftlich interessant wegen des relativ hohen Edelmetallgehalts einiger Superlegierungen. So findet man z.B. in speziellen Superlegierungen Rhenium mit einem Anteil bis zu 6 Gew.-%. Darüber hinaus stellen auch weitere Legierungsbestandteile wie z.B. Platin, Tantal, Wolfram, Molybdän Wertmetalle dar.

Nach dem Stand der Technik zur Rückgewinnung der metallischen Bestandteile aus der Superlegierung wird die Superlegierung geschmolzen und unter Schutzgasatmosphäre zu feinteiligem Pulver verdüst. Das Pulver wird danach in konzentrierter Säure aufgeschlossen und weiter aufgearbeitet. Diese Vorgehensweise ist wenig befriedigend, da Superlegierungen erst bei relativ hohen Temperaturen zwischen 1200°C und 1400°C schmelzen. Darüber hinaus muß der gesamte Schmelz- und Verdüsungsprozess in einer inerten Schutzgasatmosphäre ablaufen, weil sonst einige Metalle sofort flüchtige und zudem gesundheitsgefährdende Oxide bilden. (So hat z.B. Rhenium(VII)oxid einen Siedepunkt von 360°C.) Der eigentliche Aufschluß geschieht erst am verdüsten Pulver in konzentrierter Säure und benötigt erfahrungsgemäß einige Tage.

Nach dem Journal of Applied Electrochemistry 1977, 7, 1-29 ist bekannt, daß durch elektrochemische Oxidation in wäßrigen Elektrolytlösungen auch harte Werkstücke aus Metall bzw. Legierungen bearbeitet werden können. Diese Verfahrensweise ist allgemein unter der Bezeichnung 'electrochemical machining' bzw. 'electrochemical grinding' bekannt und wird eingesetzt in der Herstellung von komplexen Bauteilen. Auch Superlegierungen lassen sich nach diesem elektrochemischen Verfahren bearbeiten. Allerdings ist das Verfahren ungeeignet für den Aufschluß und Rückgewinnung der Legierungsbestandteile, da sich die Reaktionsprodukte nur ungenügend aufarbeiten und trennen lassen. Durch die anodische Oxidation in wäßrigen Lösungen bilden sich bevorzugt schwer filtrierbare Hydroxide und Oxide.

Außerdem ist zu beachten, daß manche Legierungen durch anodische Oxidation eine dichte, stromundurchlässige Oxidschicht ausbilden, die eine weitere Oxidation der Legierung wirksam unterbindet. Diese sehr robusten Passivierungsschichten können erst bei sehr hohen Elektrolysespannungen von 50 Volt und mehr durchbrochen werden. Dadurch wird aber ein elektrochemisches Verfahren in wäßrigen Elektrolyten wirtschaftlich uninteressant.

Aufgabe dieser Erfindung war es daher, ein Verfahren zum Aufschluß und Recycling von Legierungsbestandteilen aus Superlegierungen zur Verfügung zu stellen, welches einfach und kostengünstig durchgeführt werden kann. Diese Aufgabe wurde gelöst durch elektrochemische Oxidation der Legierung in einem organischen Elektrolyten und anschließender Trennung der Legierungsmetalle nach einem chemischen Trennungsgang.

Gegenstand dieser Erfindung ist somit ein Verfahren zum Aufschluß von Rhenium-haltigen Superlegierungen gemäß Anspruch 1. Das erfindungsgemäße Verfahren ist insbesondere anwendbar für Superlegierungen, die Metalle und Metallverbindungen, sowie aus wirtschaftlicher Hinsicht Rhenium enthalten.

Das erfindungsgemäße Verfahren wird so durchgeführt, daß der elektrochemische Aufschluß durch anodische Oxidation in einer Elektrolyse erfolgt. Hierbei wird die Superlegierung als Anode eingesetzt, die sich durch elektrochemische Oxidation in der Elektrolytlösung auflöst.

Die erfindungsgemäße Elektrolytlösung setzt sich zusammen aus einem oder mehreren protischen, organischen Lösungsmitteln und einem oder mehreren Leitsalzen. Zur Verbesserung der elektrischen Leitfähigkeit und der Löslichkeit der Leitsalze kann die Elektrolytlösung auch bis zu 50 %Wasser enthalten.

Als protisches, organisches Lösungsmittel sind erfindungsgemäß geeignet (a) primäre, sekundäre und tertiäre aliphatischen und aromatische Alkohole wie zum Beispiel Methanol, Ethanol, iso-Propanol, Butanol und Phenol und (b) β-Diketonate, wie zum Beispiel Acetylaceton (2,4-Pentandion). Auch die Gemische der Lösungsmittel können erfindungsgemäß erfolgreich eingesetzt werden. Erfindungsgemäß besonders bevorzugt sind Methanol, Ethanol, iso-Propanol und Acetylaceton.

Zu der Elektrolytlösung kann Wasser bis höchstens 50 % hinzugefügt werden, um die elektrische Leitfähigkeit des Elektrolytsystems zu erhöhen. Es ist aber dabei zu beachten, daß sich bei manchen Legierungen schon bei einem relativ geringen Wasseranteil eine Passivierung der Anodenoberfläche einstellt. Ein zu hoch gewählter Wassergehalt hat zudem zur Folge, daß ein nur schwer verarbeitbares Gel bzw. Sol entsteht. Erfindungsgemäß ist es daher zweckmäßig, den Wassergehalt der Elektrolytlösung auf unter 10 % zu beschränken.

Die Funktion des Leitsalzes, das in dem Elektrolytsystem gelöst ist, besteht darin, die Leitfähigkeit des organischen Lösungsmittels zu erhöhen und damit ein Fließen des Elektrolysestroms zu ermöglichen. Als Leitsalze sind erfindungsgemäß geeignet die Ammoniumhalogenide und die Halogenide, Sulfate, Hydrogensulfate und Nitrate der Alkalimetalle, Erdalkalimetalle und Übergangsmetalle der Gruppen 7 bis 12 des Periodensystems der Elemente. Erfindungsgemäß sind LiCl, NH₄Cl, NaCl, NaNO_{3,} CoCl₂ und NiCl₂ besonders zur Durchführung des elektrochemischen Aufschlußverfahrens geeignet.

Die Konzentration des Leitsalzes liegt typischerweise im Bereich von 0.1 M bis zur Sättigungsgrenze des Salzes in der Elektrolytlösung. Obwohl das erfindungsgemäße Verfahren auch bei niedrigeren Leitsalzkonzentrationen durchgeführt werden kann, sind hohe Leitsalzkonzentrationen, die eine niedrigere Elektrolysespannung zur Folge haben, sinnvoll.

Als Kathodenmaterial wird ein unter den Verfahrensbedingungen inertes, leitfähiges Material eingesetzt. Vorteilhaft sind zum Beispiel Gitterbleche aus platiniertem Stahl wegen der geringen Überspannung für die Wasserstoffabscheidung. Auch Graphit ist ein geeignetes und billiges Kathodenmaterial zur Durchführung des erfindungsgemäßen Verfahrens.

Die Temperatur, bei der die Elektrolyse durchgeführt wird, ist unkritisch. Das im allgemeinen zweckmäßigste Verfahren besteht darin, die Elektrolyseapparatur mit einem Rückflußkühler oder einer Kühlvorrichtung zu versehen und die Elektrolyse bei dem Siedepunkt der flüssigen Elektrolytlösung durchzuführen. Dabei reicht die Widerstandserhitzung durch den Elektrolysestrom in der Regel aus, um die Elektrolytlösung zum Sieden zu bringen. Das Verfahren kann jedoch auch erfolgreich bei Temperaturen unter dem Siedepunkt der Elektrolytlösung durchgeführt werden.

Der in dem erfindungsgemäßen Verfahren verwendete Strom kann ein einfacher Gleichstrom oder ein rektifizierter Wechselstrom sein, der auch geglättet sein kann. Die Stromdichte an der Anode liegt typischerweise im Bereich von 1 mA/cm² bis 500 mA/cm², obwohl das Arbeitsverfahren auch bei Stromdichten außerhalb dieses Bereichs möglich ist. Die Elektrolysespannung im erfindungsgemäßen Verfahren wird durch eine Reihe von Faktoren bestimmt und sollte möglichst niedrig gehalten werden. Die wichtigsten Faktoren, die die Spannung während der Elektrolyse beeinflußen, sind der Elektrodenabstand zwischen Anode und Kathode, die Elektrodengeometrie, die Leitsalzkonzentration und die Temperatur während der Elektrolyse. Typischerweise liegt die Elektrolysespannung im Bereich von 5 V bis 100 V, obwohl das Arbeitsverfahren auch bei Spannungen außerhalb dieses Bereiches möglich ist.

Während der Elektrolyse kann sich das ganze Elektrolysebad in einem Ultraschallbad befinden, um die mechanische Ablösung der Produkte der anodischen Oxidation zu erleichtern

Die Aufarbeitung und Trennung der Wertstoffe kann bevorzugt so erfolgen, daß die bei der Elektrolyse entstehende Suspension filtriert wird und aus dem so gewonnenen Filtrationsrückstand die Legierungsmetalle durch thermische und hydrometallurgische Verfahrensschritte gewonnen werden.

Die Trennung des Wertstoffniederschlages kann nach üblichen, dem Stand der Technik entsprechenden Verfahrensschritten vorgenommen werden, wobei im folgenden zwei bevorzugte Wege beschrieben werden.

Eine Variante der Aufarbeitung besteht darin, daß der getrocknete Feststoffanteil im Sauerstoffstrom calciniert wird. Rhenium verflüchtigt sich vollständig als Re₂O₇ und wird aus der Gasatmosphäre durch Auswaschen abgeschieden.

Bevorzugt wird beim erfindungsgemäßen Verfahren der thermische Verfahrensschritt als Calcination bei Temperaturen zwischen 500°C und 1200°C, bevorzugt zwischen 600°C und 900°C, in Gegenwart von Luft und/oder Sauerstoff durchgeführt. Die beim thermischen Verfahrensschritt anfallenden Gase können einer Gaswäsche mit Wasser oder wäßrigen basischen Lösungen unterzogen werden, wobei die flüchtigen Wertstoffkomponenten dem Gas entzogen werden.

Das Calcinationsprodukt wird dann anschließend durch hydrometallurgische Trennoperationen, wie z.B. Wasserlaugung, salzsaurer bzw. flußsaurer Aufschluß, Ionenaustauscher, in weiteren Werkstoffkomponenten zerlegt.

Eine andere Variante der Aufarbeitung besteht darin, daß die Calcination des trockenen Feststoffanteils der Suspension mit überschüssigem Calciumhydroxid vorgenommen wird und anschließend einer Wasserlaugung unterworfen wird.

Der Rheniumanteil wird als Calziumperrhenat gebunden und durch die üblichen Verfahren abgetrennt.

Die vorliegende Erfindung wird im folgenden anhand einiger Beipiele näher erläutert, ohne Einschränkungen für naheliegende Variationen der Prozeßführung.

### Beispiele

### Beispiel 1

### Elektochemischer Aufschluß in Methanol und Aufarbeitung

Eine Elektrolysezelle aus Glas wurde mit einem Rückflußkühler versehen und mit einem Kathodengitter aus platiniertem Edelstahl bestückt. Die Anode wurde in einem geringen Abstand zur Kathode angebracht. Als Anode diente eine Turbinenschaufel aus einer Superlegierung, deren Bestandteile in Tabelle 1 aufgeführt werden.

**Tabelle 1:**

| Zusammensetzung der Superlegierung | |
|---|---|
| Element | Legierung [%] |
| Al | 6,11 |
| Co | 11,63 |
| Cr | 6,75 |
| Hf | 1,23 |
| Mo | 1,32 |
| Re | 2,45 |
| Ta | 6,04 |
| W | 4,35 |
| Ni | Rest 60,12 |

Als Elektrolytlösung diente eine 0.5 molare Lösung von Lithiumchlorid in Methanol. Der Elektrolysestrom betrug 7 Ampere bei einer Spannung von 14 Volt. Die Lösung farbte sich während der Elektrolyse schwarz. Die Ablösung von polymeren Metallalkoxiden und des Anodenschlamms von der Anode wurde mit Hilfe eines Ultraschallbades unterstützt. Nach einer Elektrolysedauer von 325 Minuten betrug der Massenverlust der Anode 35 Gramm Superlegierung, d.h. pro Mol Elektronen wurden 25,7 Gramm Superlegierung aufgeschlossen. Die so hergestellte Lösung bzw. Suspension von Metallalkoxiden und Anodenschlamm wird wie folgt weiterverarbeitet.

Durch Filtration wird der Feststoffanteil von der Suspension separiert. Nach Trocknung beträg die Masse 51,0 g.

Im Rohrofen wird der Rückstand einer Calcination über 60 Minuten bei 600°C im Sauerstoffstrom unterworfen. In der basischen Absorptionslösung von zwei in Reihe geschalteten Gaswaschflaschen hinter dem Rohrofen scheiden sich 91 % des anodisch gelösten Rheniums ab (500 ml mit 1,56 g/l Re). Der graugrüne Calcinationsrückstand von 37,4 g wird in 200 ml VE-Wasser 3 Stunden unter Rückfluß gekocht, anschließend filtriert und gewaschen. 98 % des Nickel, 97 % Cobalt sowie 89 % des Molybdäns finden sich in dieser sauren Lösung (50 ml mit 39,7 g/l Ni; 7,9 g/l Co; 0,82 g/l Mo).

Es verbleibt ein getrockneter schwarzer Rückstand von 4,6 g mit 41,7 % Ta; 28,8 % W und 8,9 % Hf, der durch einen flußsauern Aufschluß vollständig gelöst wird.

### Beispiel 2

### Elektrochemischer Aufschluß in einer wäßrigen Acetylaceton-iso-Propanol Lösung

Eine Anode bestehend aus der bereits beschriebenen Superlegierung wurde in einer Elektrolytlösung aus 165 ml iso-Propanol, 168 ml Acetylaceton, 667 ml Wasser und 11,4 g Natriumchlorid nach der in Beispiel 1 beschriebenen Elektrolyseapparatur aufgelöst. Es wurde eine Spannung von 15 V angelegt. Der Elektrolysestrom betrug 5 A. Es wurden 26,4 g Superlegierung pro Faraday Ladung aufgeschlossen Die Aufarbeitung erfolgt nach einer der beiden bereits beschriebenen Varianten.

### Beispiel 3

### Elektrochemischer Aufschluß in Methanol mit 10 % Wasser.

Eine Anode bestehend aus der bereits beschriebenen Superlegierung wurde in einer Elektrolytlösung aus Methanol, versetzt mit 10 % Wasser und LiCl elektrochemisch aufgelöst. Bei einer Spannung von 20 V floß ein Elektrolysestrom von 7 A. Es wurden 24,8 g Superlegierung pro Faraday Ladung aufgeschlossen. Die Aufarbeitung erfolgt nach einer der beiden bereits beschriebenen Varianten.

## Patentansprüche

1. Verfahren zum Aufschluß von Rhenium-haltigen Superlegierungen und anschließender Rückgewinnung der Legierungsmetalle, dadurch gekennzeichnet, daß der Aufschluß elektrochemisch durch anodische Oxidation in einer Elektrolyse durchgeführt wird, wobei die Elektrolyse in einem Elektrolysebad erfolgt, welches eine protische, organische Lösungsmittelkomponente und eine Leitsalzkomponente enthält.

2. Verfahren gemäß Anspruch 1, dadurch gekennzeichnet, daß die organische Lösungsmittelkomponente aus der Substanzklasse der Alkohole und β-Diketone stammt und bis zum 50 % Wasser enthält.

3. Verfahren gemäß einem der Ansprüche 1 oder 2, dadurch gekennzeichnet, daß die organische Komponente Methanol, Ethanol, Isopropanol und/oder Acetylaceton ist.

4. Verfahren gemäß einem oder mehreren der Ansprüche 1 bis 3, dadurch gekennzeichnet, daß als Leitsalzkomponente Halogenide, Sulfate, Hydrogensulfate, Nitrate und Acetate der Metalle aus den Gruppen 1, 2 und 7 bis 12 des Periodensystems der Elemente und des Ammoniumions eingesetzt werden.

5. Verfahren gemäß Anspruch 4, dadurch gekennzeichnet, daß als Leitsalz Lithiumchlorid, Ammoniumchlorid, Natriumchlorid, Cobaltchlorid, Natriumnitrat und Nickelchlorid eingesetzt werden.

6. Verfahren gemäß einem oder mehreren der Ansprüche 1 bis 5, dadurch gekennzeichnet, daß die bei der Elektrolyse entstehende Suspension filtriert wird und aus dem so gewonnenen Filtrationsrückstand die Legierungsmetalle durch thermische und hydrometallurgische Verfahrensschritte gewonnen werden.

7. Verfahren gemäß Anspruch 6, dadurch gekennzeichnet, daß der thermische Verfahrensschritt als Calcination bei Temperaturen zwischen 500°C und 1.200°C, bevorzugt zwischen 600°C und 900°C, in Gegenwart von Luft und/oder Sauerstoff durchgeführt wird.

8. Verfahren gemäß Anspruch 7, dadurch gekennzeichnet, daß die Calcination in Gegenwart von Calciumhydroxid durchgeführt wird.

9. Verfahren gemäß einem oder mehreren der Ansprüche 6 bis 8, dadurch gekennzeichnet, daß die beim thermischen Verfahrensschritt anfallenden Gase einer Gaswäsche mit Wasser oder wäßrigen basischen Lösungen unterzogen werden, wobei die flüchtigen Wertstoffkomponenten dem Gas entzogen werden.

10. Verfahren gemäß einem oder mehreren der Ansprüche 6 bis 9, dadurch gekennzeichnet, daß der hydrometallergische Verfahrensschritt als Wasserlaugung des Calcinationsproduktes durchgeführt wird.

11. Verfahren gemäß Anspruch 10, dadurch gekennzeichnet, daß die Wasserlaugung bei pH-Werten zwischen 4 und 12, bevorzugt zwischen 6 und 8, durchgeführt und die Rückgewinnung der Legierungsmetalle aus dem Rückstand der Wasserlaugung nach üblichen hydrometallurgischen Trennoperationen vorgenommen wird.

## Claims

1. Process for the decomposition of rhenium-containing superalloys and subsequent recovery of the alloying metals, characterised in that the decomposition is carried out electrochemically by anodic oxidation in an electrolysis, the electrolysis taking place in an electrolytic bath which contains a protonic organic solvent component and a conducting salt component.

2. Process according to claim 1, characterised in that the organic solvent component belongs to the classes of substances comprising the alcohols and the β-diketones and contains up to 50% of water.

3. Process according to one of claims 1 or 2, characterised in that the organic component is methanol, ethanol, isopropanol and/or acetylacetone.

4. Process according to one or more of claims 1 to 3, characterised in that the conducting salt components used are halides, sulfates, bisulfates, nitrates and acetates of the metals of the groups 1, 2 and 7 to 12 of the periodic system of the elements, and of the ammonium ion.

5. Process according to claim 4, characterised in that the conducting salts used are lithium chloride, ammonium chloride, sodium chloride, cobalt chloride, sodium nitrate and nickel chloride.

6. Process according to one or more of claims 1 to 5, characterised in that the suspension formed during electrolysis is filtered and the alloying metals are recovered by thermal and hydrometallurgical processing steps from the filtration residue thus obtained.

7. Process according to claim 6, characterised in that the thermal processing step is carried out as a calcination at temperatures of between 500°C and 1200°C, preferably of between 600°C and 900°C, in the presence of air and/or oxygen.

8. Process according to claim 7, characterised in that the calcination is carried out in the presence of calcium hydroxide.

9. Process according to one or more of claims 6 to 8, characterised in that the gases accumulating during the thermal processing step are subjected to gas washing with water or with aqueous basic solutions, in the course of which the volatile useful materials are withdrawn from the gas.

10. Process according to one or more of claims 6 to 9, characterised in that the hydrometallurgical processing step is carried out as a leaching of the calcination product with water.

11. Process according to claim 10, characterised in that the leaching with water is carried out at pH values of between 4 and 12, preferably of between 6 and 8, and the recovery of the alloying metals from the residue of the leaching with water is undertaken by conventional hydrometallurgical separating operations.

## Revendications

1. Procédé pour la décomposition de superalliages contenant du rhénium et pour la récupération subséquente des métaux de l'alliage, caractérisé en ce que l'on réalise la décomposition électrochimiquement par oxydation anodique dans une électrolyse, l'électrolyse étant réalisée dans un bain d'électrolyse, lequel contient un constituant de solvant organique, protique et un constituant de sel conducteur.

2. Procédé selon la revendication 1, caractérisé en ce que le constituant de solvant organique provient de la classe des substances des alcools et des β-dicétones et contient jusqu'à 50 % d'eau.

3. Procédé selon l'une quelconque des revendications 1 ou 2, caractérisé en ce que le constituant organique est le méthanol, l'éthanol, l'isopropanol et/ou l'acétylacétone.

4. Procédé selon l'une ou plusieurs quelconques des revendications 1 à 3, caractérisé en ce que l'on utilise comme constituant de sel conducteur des halogénures, des sulfates, des hydrogénosulfates, des nitrates et des acétates des métaux des groupes 1, 2 et 7 à 12 du système périodique des éléments et de l'ion ammonium.

5. Procédé selon la revendication 4, caractérisé en ce que l'on utilise comme sel conducteur le chlorure de lithium, le chlorure d'ammonium, le chlorure de sodium, le chlorure de cobalt, le nitrate de sodium et le chlorure de nickel.

6. Procédé selon l'une ou plusieurs quelconques des revendications 1 à 5, caractérisé en ce que l'on filtre la suspension produite lors de l'électrolyse et on récupère à partir du résidu de la filtration ainsi obtenu les métaux de l'alliage par des étapes thermique et hydrométallurgique du procédé.

7. Procédé selon la revendication 6, caractérisé en ce que l'on réalise l'étape thermique du procédé comme une calcination à des températures comprises entre 500 et 1200°C, de préférence entre 600°C et 900°C, en présence d'air et/ou d'oxygène.

8. Procédé selon la revendication 7, caractérisé en ce que l'on réalise la calcination en présence d'hydroxyde de calcium.

9. Procédé selon l'une ou plusieurs quelconques des revendications 6 à 8, caractérisé en ce que l'on soumet les gaz produits dans l'étape thermique du procédé à un lavage des gaz avec de l'eau ou des solutions basiques aqueuses, les constituants volatils des matières précieuses étant prélevés des gaz.

10. Procédé selon l'une ou plusieurs quelconques des revendications 6 à 9, caractérisé en ce que l'on réalise l'étape hydrométallurgique du procédé comme un lessivage à l'eau du produit de la calcination.

11. Procédé selon la revendication 10, caractérisé en ce que l'on réalise le lessivage à l'eau à des valeurs de pH comprises entre 4 et 12, de préférence comprises entre 6 et 8 et on entreprend la récupération des métaux de l'alliage à partir du résidu du lessivage à l'eau selon des opérations de séparations hydrométallurgiques classiques.
